# EUROPEAN PATENT APPLICATION

(11) **EP 4 741 431 A1**
(43) Date of publication of application: **13.05.2026**
(21) Application number: 24211584.8
(22) Date of filing: 07.11.2024
(51) Int. Cl.: C08G 18/08, B33Y 10/00, B33Y 70/00, B33Y 80/00, C08G 18/38, C08G 18/48, C08G 18/50, C08G 18/76, C08K 3/36, C08K 3/40, C08K 5/00, C08K 7/28, C08L 75/08, C08K 3/26

(54) **A MULTIPLE-COMPONENT POLYURETHANE COMPOSITION AND USE THEREOF**

(71) Applicant: Sika Technology AG, 6340 Baar (CH)
(72) Inventor: LIANG, Shuyu, 8048 Zürich (CH); CHOFFAT, Fabien, 8048 Zürich (CH); LABOUREIX, Gabriel, 8048 Zürich (CH); SCHLUMPF, Michael, 8048 Zürich (CH)
(74) Representative: Sika Patent Attorneys

(57) **Abstract**

1. A multiple-component polyurethane composition composed of a first component A and a second component B, wherein the first component A comprises:
a) At least one polyol PO having an average hydroxyl number determined according to ISO 4629-2:2016 standard of 350 - 1500 mg KOH/g, preferably 450 - 1000 mg KOH/g and the second component B comprises:
b) At least one aromatic polyisocyanate PI,

and wherein the at least one polyol PO is a tetra- or higher functional polyol containing at least one tertiary amine group , preferably one or two tertiary amine groups and
wherein the first component A comprises at least 10 wt.-%, preferably at least 15 wt.-%, of the at least one polyol PO.

## Description

### Technical field

The invention relates to multiple-component polyurethane compositions and use of them as modelling and tooling materials or for producing three-dimensional objects by using additive manufacturing or a mass casting processes. The invention relates particularly to multiple-component polyurethane compositions, which can be cured at room temperature or elevated temperature and which in their cured state have a high glass transition temperature.

### Background art

Polyurethane polymers are widely used for providing different types of products including, for example, foams, coatings, adhesives, sealants, electrical potting compounds, fibers as well as models, designs and tools. Reactive polyurethane compositions can be provided as single- or multiple component compositions, which typically contain monomeric, oligomeric, or polymeric compounds including one or more types of functional groups that react with each other or with other substances, such as with atmospheric moisture. For example, a multiple-component reactive polyurethane composition may comprise a first component with isocyanate-reactive compounds, such as oligomers or polymers with reactive functional groups, particularly hydroxyl groups, whereas the second component comprises one or more different types of polyisocyanates, i.e., compounds with free isocyanate groups. Upon curing of a reactive polyurethane composition, polyurethane polymers are first formed in reactions between polyisocyanates and polyols. In the second step, polyurethane polymers react with crosslinkers, such as amine crosslinkers or with atmospheric moisture, to give a crosslinked network structure.

Curable epoxy and polyurethane compositions are also used for making of models, prototypes, tools, foundry patterns, cold core boxes, and moulds for use in automotive, marine and aeronautics industries. In a conventional process, the composition is provided as a board (block material), which is then mechanically processed, for example, by cutting and/or milling, into the final design, such as a prototype, model, or a tool, for example a mould. The boards having a standardized size are commonly known as design, styling, model, tooling, and foundry tooling boards. The traditional production process has the disadvantage of a considerable processing time and a high amount of waste material, which is produced during the cutting and/or milling steps. The amount of waste material can be reduced by using a mass casting process but this requires the use of moulds having an individualized shape for each design. Furthermore, mass casting has limitations in terms of the maximum size and variability of shapes to be produced.

Additive manufacturing (AM) techniques are widely used in various industries to create physical prototypes as well as end-use parts. According to ISO 52900 standard, AM is a "process of joining materials to make parts from 3D model data, usually layer upon layer". AM techniques provide an alternative to conventional manufacturing processes, in which, for example, material is molded or subtracted by milling to create a three-dimensional (3D) object.

Generally, in an AM process a 3D article is manufactured using a shapeless material (e.g. liquids, powders, granules, pastes, etc.) and/or a shape-neutral material (e.g. bands, wires, filaments) that is subjected to chemical and/or physical processes (e.g. melting, polymerization, sintering, curing or hardening). The main categories of additive manufacturing technologies include VAT photopolymerization, material extrusion, material jetting, binder jetting, powder bed fusion, direct energy deposition, and sheet lamination techniques. Additive manufacturing is also known as rapid prototyping, on-demand manufacturing, digital fabrication, solid freeform manufacturing, or 3D printing.

In an AM process, the material is deposited, applied or solidified under computer control based on a digital model of the 3D object to be produced, to create 3D object. The digital model of the 3D article can be created, for example, by using a CAD software or a 3D object scanner. The deposition, application and/or consolidation of the material, for example a curable composition, is carried out in particular on the basis of a data model of the object to be generated and in particular layer-by-layer.

There has also been some attempts to use chemically curable polymer compositions as printing materials in an AM process with the objective of improving the chemical and physical properties of the prepared 3D objects. The chemical basis for such printing materials is, for instance, RTV-2 silicones, or multiple-component epoxy and polyurethane compositions. Multiple-component reactive compositions have some advantages when used in 3D printing processes since the highly reactive constituents, such as curing agents and binders, can be provided in separate components and the curing process begins only after mixing of the two components with each other. In theory, an ideal curable material for 3D printing process would cure rapidly and enable printing with high speeds. The applied material should also cure homogeneously without forming gradients in the layers and independently on external curing factors, particularly air humidity.

In practice, providing an optimized chemically curable organic binder material for 3D printing having all desired properties has turned out to be very challenging. Fast curing multiple-component compositions are easy to provide and the cured 3D printed objects also exhibit improved chemical and physical properties compared to those obtained from non-reactive materials. However, the curing reactions of multiple-component compositions begin immediately after mixing of the components with each other resulting in rapid increase in the viscosity of the material, which complicates controlled output of the material from a print head or could even result in blocking of the print head. Furthermore, a certain dwell time in a mixer is required to provide a homogeneously mixed material.

Curable polyurethane compositions have many advantageous properties, which make them especially suitable for use as foams, coatings, adhesives, sealants as well as modeling and tooling materials. For example, they exhibit a high impact resistance and flexibility, which allows them to absorb shocks and vibrations, which is crucial in applications like automotive assembly and boat building. Furthermore, polyurethane compositions can be designed to have a desired flexibility by selecting the reactive components such that the polyurethane polymers contained in the cured composition contain a certain ratio of soft and hard polymer segments. Finally, polyurethane compositions can typically be cured at room temperature whereas epoxy resin-based compositions, particularly those used as tooling materials, require post curing steps at high temperatures, such as above 120 °C, to further increase the dimensional stability.

However, compared to epoxide resin-based compositions, the polyurethane compositions have the disadvantage of a significantly lower heat stability, especially at temperatures of higher than 130 °C. Consequently, commonly available polyurethane compositions are unsuitable for providing moulds that are used in casting processes involving injection and mixing of flowable materials at high temperatures and pressures. Consequently, composite tooling boards that are mechanically processed into specific tools, such as prepreg moulds, parts, vacuum forming/casting tools, low pressure RIM moulds, or metal sheet stamping tools, are typically made of epoxy resin-based materials, which are known to exhibit high dimensional stability under heat and pressure, especially when post cured at high temperatures. Particularly, the prepreg moulds are required to have a glass transition temperature, which is significantly higher, such as at least 20 °C higher, than the curing temperature of the resin used for coating of the fibers of the prepreg part.

There is thus a need for a new type of multiple-component polyurethane composition having an improved heat stability in its cured state. Such compositions are especially suitable for providing composite and foundry tooling boards and moulds that are required to exhibit high dimensional stability under heat and pressure, such as prepreg moulds.

The multiple-component polyurethane composition should also be suitable for use as an extrudable paste, particularly for producing of three-dimensional objects by additive manufacturing methods to minimize the amount of waste material and to enable simplified and cost effective production of large-scale articles with complicated geometries.

### Disclosure of the invention

It is an object of the present invention to provide a multiple-component polyurethane composition having an improved heat stability in its cured state, especially for use as adhesives, sealants, coatings, block materials or pastes for tooling and mould making, or as a 3D printing material.

Particularly, the multiple-component polyurethane composition should enable easy and efficient production of large-scale three-dimensional (3D) objects, such as moulds, particularly prepreg molds, patterns, tools, prototypes, master models, core models, or negative models, especially for use in for use in automotive, marine and aeronautics industries, by using a casting or an additive manufacturing process.

Surprisingly, it was found that these objects can be achieved with the multiple-component polyurethane composition according to independent claim 1.

Specifically, according to the invention, a multiple-component polyurethane composition is provided, the composition comprising a first component **A** and a second component **B,** wherein the first component **A** comprises:
a) At least one polyol **PO** having an average hydroxyl number determined according to ISO 4629-2:2016 standard of 350 - 1500 mg KOH/g, preferably 450 - 1000 mg KOH/g
and the second component **B** comprises:
b) At least one aromatic polyisocyanate **PI,**
and wherein the at least one polyol **PO** is a tetra- or higher functional polyol containing at least one tertiary amine group, preferably one or two tertiary amine groups and
wherein the first component **A** comprises at least 10 wt.-%, preferably at least 15 wt.-%, of the at least one polyol **PO.**

As it turned out, the use of a combination of the at least one polyol **PO** and the at least one aromatic polyisocyanate **PI** enables providing polyurethane compositions having in their cured state an especially high glass transition temperature and thermal stability. Such compositions were also found out to be especially suitable for providing adhesives, sealants, and coatings or block materials or pastes for tooling and mould making.

Furthermore, the inventive multiple-component polyurethane compositions were also found out exhibit a favorable curing behavior, which makes them especially suitable for use in high-speed 3D printing applications. Particularly, the suggested multiple-component polyurethane compositions were found to have a sufficient open time, which enables effective mixing of the first and second components in a mixer without a significant change in the viscosity of the mixed composition followed by rapid curing reaction enabling high printing speed and high layer thickness. The curing behavior of the multiple-component polyurethane composition was found out to be easily adjustable by selection of the type and amount of the polyol(s) **PO** and especially without use of catalysts, particularly without using complexed metal catalysts.

Further aspects are described below and are subject of the further independent claims. Particularly preferred embodiments are outlined throughout the description and the dependent claims.

### Ways of carrying out the invention

A first aspect of the present invention is directed to a multiple-component polyurethane composition is provided, the composition comprising a first component **A** and a second component **B,** wherein the first component **A** comprises:
a) At least one polyol **PO** having an average hydroxyl number determined according to ISO 4629-2:2016 standard of 350 - 1500 mg KOH/g, preferably 450 - 1000 mg KOH/g, more preferably 500 - 1000 mg KOH/g, even more preferably 550 - 1000 mg KOH/g,
and the second component **B** comprises:
b) At least one aromatic polyisocyanate **PI,**
and wherein the at least one polyol **PO** is a tetra- or higher functional polyol containing at least one tertiary amine group, preferably one or two tertiary amine groups and
wherein the first component **A** comprises at least 10 wt.-%, preferably at least 15 wt.-%, of the at least one polyol **PO.**

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight can be determined by conventional methods, preferably by gel permeation-chromatography (GPC) using polystyrene as standard, styrenedivinylbenzene gel with porosity of 100 Angstrom, 1000 Angstrom and 10000 Angstrom as the column, and depending on the molecule, tetrahydrofurane as a solvent, at a temperature of 35°C or 1,2,4-trichlorobenzene as a solvent, at 160 °C.

Furthermore, the expression "tetra- or higher functional" is understood to mean that a compound, for example, a polyol, has an average at least four functional groups, such as hydroxyl, per molecule.

An isocyanate is called "aliphatic" when its isocyanate group is directly bound to an aliphatic, cycloaliphatic or arylaliphatic moiety. The corresponding functional group is therefore called an aliphatic isocyanate group. Furthermore, an isocyanate is called "aromatic" when its isocyanate group is directly bound to an aromatic moiety. The corresponding functional group is therefore called an aromatic isocyanate group.

One of the main advantages of the multiple-component polyurethane composition is that the material obtained by curing of the composition has an exceptionally high glass transition temperature and, therefore, a high thermal stability.

In embodiments, the multiple-component polyurethane composition of the present invention has in its cured state a glass transition temperature (T_{g}) determined by dynamical mechanical analysis (DMA) in accordance with ISO 6721-11:2019 standard as the peak of the measured loss modulus (G") curve using an applied frequency of 1 Hz and a strain level of 0.1% of at or above 135 °C, preferably at or above 150 °C, more preferably at or above 170 °C.

Particularly, the multiple-component polyurethane composition in its cured state can be obtained by mixing the components of the multiple-component polyurethane composition of the present invention, particularly the first component **A** and the second component **B,** with each other and letting the thus obtained curable composition to cure, especially at normal room temperature.

The at least one polyol **PO** has at least one tertiary amine group, preferably one or two tertiary amine groups, particularly exactly two tertiary amine groups.

The term "tertiary amine group" refers in the present disclosure to an amine group, which is connected to three organic moieties, two or three of which may also be part of one or more rings and carries no hydrogen atoms.

In embodiments, the at least one polyol **PO** has a number average molecular weight (Mₙ) determined by gel permeation-chromatography (GPC) using polystyrene as standard in the range of 150 - 15000 g/mol, preferably 250 - 12000 g/mol, more preferably 300 - 10000 g/mol.

Particularly, the at least one polyol **PO** may be a compound of formula (I) 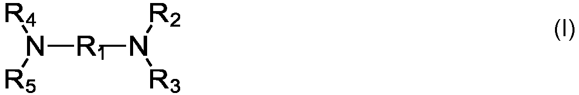 where R₁ represents a linear or branched alkyl group with 2 to 12 carbon atoms, preferably 2 to 8 carbon atoms and
R₂,R₃, R₄, and R₅ each represent linear or branched alkyl group with 2 to 18 carbon atoms, preferably 2 to 12 carbon atoms, substituted with one or more hydroxy groups and optionally containing one or more ether groups.

Suitable polyols of formula (I) are commercially available, for example, under the trade name of Dytek^{®} (from Invista), Lupranol^{®} (from BASF), Desmophen^{®} (from Covestro), and Voranol^{®} (from Dow).

In embodiments, the proportion of the at least one polyol **PO** makes up at least at least 35 wt.-%, preferably at least 50 wt.-%, more preferably at least 75 wt.-%, still more preferably at least 90 wt.-%, of the total weight of all polyols contained in the first component **A** of the multiple-component polyurethane composition.

In exemplary embodiments, the at least one polyol **PO** comprises at least one alkoxylated alkylene diamine **PO1,** preferable selected from N,N,N',N'-tetrakis(2-hydroxyethyl)ethylenediamine, N,N,N',N'-tetrakis(2-hydroxypropyl)ethylenediamine, 1,1',1 ",1‴-((2-methylpentane-1,5-diyl)bis(azanetriyl))tetrakis(propan-2-ol), 3,3',3'',3‴-((2-methylpentane-1,5-diyl)bis(azanetriyl))tetrakis(propane-1,2-diol), and 4-[8-hydroxy-3-(2-hydroxypropyl)-5-methyl-6-oxa-3-azanonyl]-4-aza-2,6-heptanediol, and 1-({3-[bis(2-hydroxypropyl)amino]-2-tolyl}(2-hydroxypropyl)amino)-2-propanol.

The expression at least one compound X comprises at least one compound XN", such as "the at least one polyol **PO** comprises at least one alkoxylated alkylene diamine **PO1",** is understood to mean that the composition contains at least one compound XN as representative of the at least one compound X, such as at least one alkoxylated alkylene diamine **PO1** as representative of the at least one polyol **PO.**

The alkoxylated alkylene diamines **PO1** have been found out to be especially suitable for providing multiple-component polyurethane compositions, which in their cured state have an exceptionally high glass transition temperature and, therefore, exhibit a high thermal stability.

In embodiments, the at least one polyol **PO** may comprise at least 15 wt.-%, particularly at least 35 wt.-%, especially at least 50 wt.-%, of the at least one alkoxylated alkylene diamine **PO1,** based on the total weight of all polyols **PO** in the first component **A** of the multiple-component polyurethane composition.

In exemplary embodiments, the at least one polyol **PO** is an alkoxylated alkylene diamine, preferable selected from N,N,N',N'-tetrakis(2-hydroxyethyl)ethylenediamine, N,N,N',N'-tetrakis(2-hydroxypropyl)ethylenediamine, 1,1',1",1‴-((2-methylpentane-1,5-diyl)bis(azanetriyl))tetrakis(propan-2-ol), 3,3',3",3‴-((2-methylpentane-1,5-diyl)bis(azanetriyl))tetrakis(propane-1,2-diol), and 4-[8-hydroxy-3-(2-hydroxypropyl)-5-methyl-6-oxa-3-azanonyl]-4-aza-2,6-heptanediol, and 1-({3-[bis(2-hydroxypropyl)amino]-2-tolyl}(2-hydroxypropyl)amino)-2-propanol.

Suitable polyisocyanates for use as the at least one aromatic polyisocyanate **PI** include, for example, monomeric, oligomeric, and polymeric polyisocyanates and derivatives of these.

The term "monomeric polyisocyanate" refers in the present disclosure to an organic compound with two or more isocyanate groups that are separated by a divalent hydrocarbon radical. Particularly, a monomeric polyisocyanate contains no urethane groups and oligomers or polymer products of polyisocyanate monomers, such as adducts of monomeric polyisocyanates, are not considered to be "monomeric polyisocyanates" in the context of the present invention.

Furthermore, the term "oligomer" designates a compound built up through the linkage of a few monomers, for example dimers, trimers, or tetramers. Term "polyisocyanate oligomer" can designate an individual oligomer or a mixture of oligomers of monomeric polyisocyanates, particularly oligomers of monomeric diisocyanates, wherein these oligomers can be built up of like or different monomeric polyisocyanates.

In embodiments, the at least one aromatic polyisocyanate **PI** is selected from monomeric di- and triisocyanates and oligomers, polymers, and derivatives of monomeric di- and triisocyanates, and mixtures thereof.

Examples of suitable aromatic monomeric polyisocyanates include, for example, perhydro-2,4'- and -4,4'-diphenylmethane diisocyanate (HMDI or H12MDI) and mixtures of these isomers, m- and p-xylylene diisocyanate (m- and p-XDI) and mixtures of these isomers, m- and p-tetramethyl-1,3- and 1,4-xylylene diisocyanate (m- and p-TMXDI) and mixtures of these isomers, bis(1-isocyanato-1-methylethyl)naphthalene, 2,4- and 2,6-tolylene diisocyanate and mixtures of these isomers (TDI), 4,4'-diphenylmethane diisocyanate, optionally with proportions of 2,4'- and/or 2,2'-diphenylmethane diisocyanate (MDI), 1,3- and 1,4-phenylene diisocyanate (PDI) and mixtures of these isomers, naphthalene 1,5-diisocyanate (NDI), 3,3'-dimethyl-4,4'-diisocyanatobiphenyl (TODI), and dianisidine diisocyanate (DADI). Furthermore, a person skilled in the art knows that the technical grade products of diisocyanates may frequently contain isomer mixtures or other isomers as impurities.

These are commercially available, for example, under the trade names of Lupranat^{®} (from BASF), Desmodur (from Covestro), Cosmonate^{®} (from Mitsui Chemical), Millionate^{®} (from Tosoh), Wannate^{®} (from Wanhua chemical), and Duranate^{®} (from Asahi Kasei).

Further examples of suitable aromatic polyisocyanates include oligomers, polymers, and derivatives of aromatic monomeric polyisocyanates containing isocyanurate, iminooxadiazindione, biuret, allophanate, carbodiimide, uretonimine or oxadiazine-trione groups.

Especially suitable aromatic oligomeric and polymeric polyisocyanates and derivatives of aromatic monomeric polyisocyanates include those based on MDI and TDI. Oligomeric and polymeric polyisocyanates are typically mixtures of substances having different degrees of oligomerization/polymerization and/or chemical structures and have an average isocyanate functionality determined according to ISO 14896-2009 standard method A in the range of 2.1 - 4.0.

Commercially available versions of these include, for example, mixtures of MDI and MDI-homologs (polymeric of MDI or PMDI), which are commercially available under the trade name of Desmodur^{®} VL 50, Desmodur^{®} VL R10, Desmodur^{®} VL R20, Desmodur^{®} VH 20 N and Desmodur^{®} VKS 20F, and Desmodur^{®} 44 V 20 L NP (all from Covestro); Isonate^{®} M 309, Voranate^{®} M 229 and Voranate^{®} M 580 (all from Dow Chemicals); Lupranat^{®} M 10 R (from BASF); and TDI-Oligomers such as Desmodur^{®} IL (from Covestro) as well as mixtures of isocyanurates based on TDI/HDI, for example Desmodur^{®} HL (von Covestro).

Furthermore suitable are at standard room temperature liquid forms of MDI ("modified MDI"), which are mixtures of MDI with MDI derivatives, such as MDI-carbodiimides or MDI-uretonimines or MDI-urethanes that are commercially available under the trade names of Desmodur^{®} CD, Desmodur^{®} PF, Desmodur^{®} PC (all from Covestro) or Isonate^{®} M 143 (from Dow Chemicals).

In embodiments, the at least one aromatic polyisocyanate **PI** has an isocyanate content determined according to ISO 11909:2007 standard of 15 - 50 wt.-%, preferably 20 - 45 wt.-%, more preferably 20 - 40 wt.-% and/or a viscosity determined according to ISO 3219-1:2021 standard of 100 - 500 mPa s, preferably 150 - 400 mPa s, more preferably 150 - 350 mPa·s and/or an average isocyanate functionality determined according to ISO 14896-2009 standard method A of 2.0 - 4.0, preferably 2.2 - 3.8, more preferably 2.4 - 3.2.

In embodiments, the at least one aromatic polyisocyanate **PI** is selected from monomers, oligomers, polymers, and derivatives of methylene diphenyl diisocyanate (MDI) and monomers, oligomers, polymers, and derivatives of toluene diisocyanate (TDI).

In embodiments, the proportion of monomers of methylene diphenyl diisocyanate (MDI) and/or proportion of monomers of toluene diisocyanate (TDI) is not more than 75 wt.-%, preferably not more than 50 wt.-%, more preferably not more than 35 wt.-%, even more preferably not more than 25 wt.-%, based on the total weight of the at least one aromatic polyisocyanate **PI.**

It may further be preferred that the sum of all isocyanate groups that do not originate from the at least one aromatic polyisocyanate **PI** is not more than 5 %, especially not more than 2 %, particularly not more than 1 %, based on the sum of all isocyanate groups contained in the multiple-component polyurethane composition.

In embodiments, the molar ratio of all isocyanate groups in the second component **B** to all hydroxyl groups in the first component **A** is in the range of 0.8 - 1.5, preferably 0.9 - 1.2.

The multiple-component polyurethane composition may still contain further constituents and additives, such as solvents, plasticizers and/or extenders, pigments, rheology modifiers, waxes, drying agents, such as zeolites or molecular sieves, stabilizers against oxidation, heat, light and UV radiation, flame-retardants, such as hydroxides or hydrates, particularly hydroxides or hydrates of aluminum or magnesium, especially aluminum trihydrate (ATH) or magnesium hydroxide (MDH), and surface-active substances, especially wetting agents and defoamers.

In embodiments, the multiple-component polyurethane composition further comprises at least one rheology modifier **RM** and/or at least one plasticizer **PL.**

In exemplary embodiments, the at least one rheology modifier **RM** is selected from polyamide waxes, bentonites, and fumed silica, preferably fumed silica, particularly surface modified fumed silica, especially hydrophobic fumed silica.

In exemplary embodiments, the at least one plasticizer **PL** is selected from adipic acid based plasticizers, such as doctyladipate (or bis(2-ethylhexyl)hexanedioate), phthalate based plasticizers, such as di-isononyle phthalate, phosphorus containing plasticizers, silicon oil, and hydrocarbon plasticizers.

Suitable hydrocarbon plasticizers are commercially available, for example, from Exxon Mobil under the trade name of Isopar^{®}.

In embodiments, the multiple-component polyurethane composition may comprise 0.1 - 25 wt.-%, preferably 1.5 - 20 wt.-%, more preferably 5-20 wt.-% of the at least one rheology modifier **RM,** preferably fumed silica, more preferably surface modified fumed silica, particularly hydrophobic fumed silica, and/or 2.5 - 35 wt.-%, preferably 5 - 30 wt.-%, more preferably 10 - 25 wt.-% of the at least one plasticizer **PL.**

In exemplary embodiments, the multiple-component polyurethane composition comprises at least one adipic acid based plasticizer **PL1** and at least one hydrocarbon plasticizer **PL2,** wherein the weight ratio of the plasticizers **PL1** and **PL2** is in the range of 7:1 to 1:1, preferably 5:1 to 1:1, more preferably 4:1 to 2:1.

In embodiments, the multiple-component polyurethane composition further comprises at least one light-weight filler **LF.** The term "light-weight filler" refers in the present disclosure to powder materials having low density, such as an apparent (skeletal) density of not more than 1.0 g/cm³, particularly not more than 0.9 g/cm³.

Generally, the density of powder materials can be determined based on different definitions for the volume occupied by the particles of the material. A "true density" refers to the ratio of the mass and the "true volume" of a sample, excluding the volume of the open pores, closed pores, and the inter-particle voids. An "apparent density", also known as "skeletal density", is calculated based on the skeletal volume of the particles, excluding both the open pores and inter-particle voids. A "bulk density" of a powder material is calculated as the mass of the particles per unit volume after the particles have freely filled a standard container under specific conditions thus including the closed pores, open pores, and inter-particle voids. True density and apparent density can be measured using both gas and liquid displacement methods. In a gas displacement method, typically helium, gas is employed instead of liquid to measure the sample volume.

Suitable light-weight fillers for use in the curable polyurethane composition include, particularly, microspheres, especially hollow microspheres such as those based on glass, ceramic, or plastic materials. Further suitable light-weight fillers include, for example, spheres, granules, and beads based on expanded glass, polystyrene, expanded perlite, expanded volcanic ash, expanded vermiculite, pumice, and scoria as well as cenospheres.

The term "cenospheres" refers in the present disclosure to a lightweight, inert, hollow spheres made largely of silica oxide and alumina oxide and filled with air or inert gas. Cenospheres are typically produced as a coal combustion byproduct at thermal power plants.

Suitable light-weight fillers for use in the multiple-component polyurethane composition are commercially available, for example, from 3M under the trade name of 3M^{®} Glass Bubbles (hollow glass spheres); from AkzoNobel under the trade name of Expancel^{®} (expanded thermoplastic spheres); from Omya under the trade name of FILLlTE^{®} (cenospheres); from Trelleborg under the trade name of ECCOSPHERES^{®} (hollow glass spheres), from Potters Industries Inc under the trade name of Q-CEL^{®} or SPHERICEL^{®}.

In the context of the present disclosure, the terms "sphere", "bead", and "granule" are used without reference to the geometrical shape of the filler. Consequently, a "hollow glass sphere" does not necessarily have a shape of a symmetrical sphere and a "granule" can be provided in form of a sphere.

In embodiments, the at least one light-weight filler **LF** has an apparent density determined by gas displacement pycnometer according to ISO 12154:2014 standard of not more than 0.6 g/cm³, preferably not more than 0.5 g/cm³, more preferably not more than 0.45 g/cm³, even more preferably not more than 0.4 g/cm³, still more preferably not more than 0.35 g/cm³.

The use of the light-weight fillers **LF** has surprisingly been found to enable reducing the density of the cured multiple-component polyurethane composition without having a significant negative impact on important material properties, especially thermal and chemical stability, elasticity, and toughness of the composition. Consequently, the suggested multiple-component polyurethane composition enables production of large-scale 3D objects by additive manufacturing having a relatively low weight. Such 3D printed objects can be provided as pre-fabricated articles, which can be easily transported to a place of use using conventional transportation means.

In embodiments, the light-weight filler **LF** is present in the multiple-component polyurethane composition in form of finely divided particles, such as having a median particle size d₅₀ of not more than 1000 µm, preferably not more than 500 µm, more preferably not more than 350 µm, even more preferably not more than 150 µm.

The term "median particle size d₅₀" refers in the present disclosure to a particle size below which 50 % of all particles by volume are smaller than the d₅₀ value. The particle size distribution may be measured, for example, by a laser diffraction method according to ISO 13320:2009 standard, particularly, using a dry dispersion method, where the particles are dispersed in air.

In exemplary embodiments, at least one light-weight filler **LF** has a median particle size d₅₀ measured according to ISO 13320:2009 standard of 1 - 500 µm, preferably 5 - 250 µm, more preferably 5 - 150 µm, even more preferably 10 - 100 µm, still more preferably 10 - 75 µm.

Particularly, the at least one light-weight filler **LF** may be selected from hollow glass spheres, expanded glass spheres, hollow ceramic spheres, cenospheres, and hollow alumina beads, especially from hollow glass spheres, expanded glass spheres, and cenospheres.

The proportion of the light weight filler **LF** preferably makes up at least 0.5 wt.-%, particularly at least 1.5 wt.-% of the total weight of the multiple-component polyurethane composition.

In embodiments, the multiple-component polyurethane composition comprises 2.5 - 35 wt.-%, preferably 5 - 30 wt.-%, more preferably 10 - 25 wt.-%, of the light weight filler **LF.**

The multiple-component polyurethane composition may still comprise at least one further filler **F,** which is different from the light-weight filler **LF,** particularly having a significantly higher apparent density than the light-weight filler **LF.** In embodiments, the further filler **F** has an apparent density determined by gas displacement pycnometer according to ISO 12154:2014 standard of at least 1.0 g/cm³, preferably at least 1.5 g/cm³.

Suitable further fillers **F** include inorganic fillers, such as, particularly, natural, ground or precipitated calcium carbonate, which are optionally coated with fatty acids, particularly with stearic acid, barite, talc, quartz flour, quartz sand, dolomites, wollastonite, kaolin, calcined kaolin, mica (potassium aluminum silicate), aluminum oxide, aluminum hydroxide, magnesium hydroxide, silicic acids including highly dispersed silicas from pyrolysis processes, industrially produced carbon blacks, graphite, metal powders such as aluminum, copper, iron, silver or steel.

The at least one further filler **F,** if contained in the multiple-component polyurethane composition, may preferably be selected from the group consisting of calcium carbonate, carbon black, kaolin, barite, talc, quartz powder, dolomite, wollastonite, kaolin, calcined kaolin and mica.

In exemplary embodiments, the multiple-component polyurethane composition contains at least one further filler **F** selected from ground and precipitated calcium carbonate, and calcined kaolin.

The further filler **F,** if used, may be present in the multiple-component polyurethane composition in a proportion of 0.5 - 20 wt.-%, preferably 1.5 - 15 wt.-%, more preferably 2.5 - 10 wt.-%.

The components of the multiple-component polyurethane composition, particularly first component **A** and the second component **B,** are preferably produced separately and especially with the exclusion of moisture. The individual components are typically each stored in a separate container or in a separate compartment of a container and are only mixed with one another on or immediately prior to use. Suitable containers for storing of the components include, for example, a vat, a hobbock, a bag, a bucket, a can, a cartridge or a tube.

Particularly, the components of the multiple-component polyurethane composition are storage-stable, meaning that they can be stored prior to use for several months up to one year or longer, without any change in their respective properties to a degree of relevance to their use.

Another aspect of the present invention is use of the multiple-component polyurethane composition as an adhesive, a sealant, a coating, a block material or a paste for tooling, modeling and/or mould making, or as a 3D printing material.

In use as adhesive or sealant or coating, the first component **A** and the second component **B** are mixed with each other to provide a curable polyurethane composition.

The use of the multiple-component polyurethane composition as an adhesive may comprise further steps of:
- applying the curable polyurethane composition to a surface of a first substrate,
- contacting the applied composition with a surface of a second substrate, and
- curing the applied composition.

The curable polyurethane composition may be applied to the surface of the first substrate using any conventional technique, for example, by means of a brush, or by pouring out and further distributed by means, for example, of a roller, a scraper, or a notched trowel.

The use of the multiple-component polyurethane composition as a sealant or coating may comprise further steps of:
- applying the curable polyurethane composition to a surface of a substrate and
- curing the applied composition.

The use the multiple-component polyurethane composition as a block material for tooling, modeling and/or mould making may comprise further steps of:
- applying the curable polyurethane composition into a block mould,
- curing the applied composition to form a cured material block,
- removing the cured material block from the mold, and
- mechanically processing the cured material block, for example, by using at least one of cutting, sawing, milling, threading, water jet or laser treatment, grinding, brushing, polishing, and abrasive blasting means, into a three-dimensional article, such as a tool, model, or a mould.

The use the multiple-component polyurethane composition as a paste for tooling, modeling and/or mould making may comprise further steps of:
- applying the curable polyurethane composition into a mould,
- curing the applied composition to form a cured article, and
- removing the cured article from the mold.

Furthermore, the use multiple-component polyurethane composition as a 3D printing material may comprise further steps of:
- applying the curable polyurethane composition layer-by-layer using a movable print head of an additive manufacturing device to prepare a shaped body from a cured polyurethane composition.

Another aspect of the present invention is a method for producing a three-dimensional object comprising the steps of:
- providing a multiple-component polyurethane composition of the present invention,
- mixing the first component **A** and the second component **B** with each other in a mixer to give a curable polyurethane composition, and
- applying the curable polyurethane composition layer-by-layer using a movable print head of an additive manufacturing device to prepare a shaped body from a cured polyurethane composition.

The shaped body prepared from the cured polyurethane composition can have almost any desired shape and it may have a solid form or a hollow form, with or without a base.

The total height of the shaped body, particularly the sum of the thicknesses of all individual layers of the shaped body may be at least 50 cm, particularly at least 75 cm, especially at least 100 cm.

In embodiments, the shaped body is a hollow object having an inner and an outer surface and a wall thickness defined between the inner and outer surfaces of, for example, at least 1 mm, particularly at least 2 mm, especially at least 3 mm.

In exemplary embodiments, the shaped body is a hollow object having a wall thickness of 1 - 50 mm, preferably 2-40 mm, more preferably 3 - 35 mm and/or a total height of at least 50 cm, preferably at least 75 cm, more preferable at least 100 cm.

The shaped body can be used as the 3D object or it can be subjected to further processing steps, such as to one or more mechanical or chemical treatment steps, for example, to change the surface properties of the shaped body.

Such aftertreatment(s) may be especially preferred if the method is used for providing 3D objects with desired surface properties, for example, objects having a low surface roughness, such as moulds having smooth inner surface to enable easy separation of the mold from the cured body.

In embodiments, the method for producing a 3D object comprises a further step of subjecting at least a portion of a surface of the shaped body to a mechanical treatment step to reduce surface roughness.

In further embodiments, the shaped body is a hollow object, particularly having a wall thickness of 1 - 50 mm, preferably 2-40 mm, more preferably 3 - 35 mm and/or a total height of at least 50 cm, preferably at least 75 cm, more preferable at least 100 cm, wherein the method for producing a 3D object comprises a further step of subjecting at least a portion of the inner surface of the hollow object to a mechanical treatment step to reduce surface roughness.

The mechanical treatment step can be conducted, for example, by using at least one of cutting, sawing, milling, threading, water jet or laser treatment, grinding, brushing, polishing, and abrasive blasting means.

In embodiments, the 3D object produced by using the method is a mold, such as a prepreg mould.

The method for producing a 3D object of the present invention is an additive manufacturing process, particularly a generative free space process, where a curable polyurethane composition obtained by mixing of the components of the multiple-component composition with each other is applied layer-by-layer using a print head of an additive manufacturing device, particularly a 3D printer, to form a shaped body from a cured polyurethane composition.

The height of a single layer, typically measured in a direction essentially perpendicular to the planes formed by single layers, especially in vertical direction, is preferably 0.5 mm to 20 mm, more preferably 3 mm to 15 mm, such as 3 mm to 10 mm.

The printhead of the additive manufacturing device is preferably movable in one, especially two or three spatial directions. Particular preference is given to a printhead movable in three spatial directions. This allows to produce shaped bodies of virtually any shape in a particularly simple manner.

The movement of the printhead can especially be achieved by mounting the printhead on a conventional robot arm movable in one, two or three spatial directions. The additive manufacturing device can be of any type, such as a robotic arm or a 3-axis gantry robot system.

The first component **A** and the second component **B** as well as any further components and/or additives can be conveyed to the mixer, for example, via one or more conveying devices, especially pumps and conveying conduits. The conveying devices are especially controllable by means of a control unit, particularly independently of one another.

In embodiments, the components of the multiple-component polyurethane composition, particularly the first component **A** and the second component **B,** are conveyed via separate supply lines to the mixer.

The mixing upstream of or within the 3D printer in the method of the invention is typically effected by means of static mixers or with the aid of dynamic mixers. In the mixing, it should be ensured that the two components are mixed with maximum homogeneity. If the components are mixed incompletely, local deviations from the advantageous mixing ratio will occur, which can result in a deterioration in the mechanical properties of the three-dimensional object.

The mixer used for mixing of the components of the multiple-component polyurethane composition with each other can be a static or dynamic mixer or a combination of these. Furthermore, the mixer is preferably mounted on the print head of the additive manufacturing device. The printhead preferably has a discharge nozzle for the layer-by-layer application of the curable polyurethane composition.

The discharge nozzle shapes the material discharged at the discharge opening. The shape of the discharge nozzle is not particularly restricted. The discharge nozzle may have a rectangular, square or a round shape. The diameter of the discharge nozzle is likewise not particularly restricted. In the case of very small diameters and simultaneously high viscosity of the composition, higher pressures are needed for extrusion. It has been found to be advantageous to use nozzles having exit openings having diameters of 0.5 mm to 100 mm, preferably 2 mm to 50 mm, especially 5 mm to 30 mm, particularly 5 mm to 25 mm. There may also be further shaping elements mounted in the discharge nozzle.

In embodiments, the discharge opening may also be larger, up to a several centimeters. This allows the application of large beads or layers of the curable polyurethane composition, where these beads or layers may have thicknesses or diameters of several centimeters or more. The multiple-component polyurethane composition used in the inventive method, even in large layers or volumes, cures homogeneously and rapidly. The average dwell (residence) time of the curable polyurethane composition in the mixer is preferably at least 5 seconds, preferably at least 10 s and/or not more than 60 seconds, preferably not more than 40 seconds.

The average dwell time of the curable polyurethane composition in the mixer is the average period for which a particle dwells in the mixer, from inlet to outlet.

Another aspect of the present invention is a method for producing a three-dimensional article comprising the steps of:
- providing a multiple-component polyurethane composition of the present invention,
- mixing the first component A and the second component B with each other in a mixer to give a curable polyurethane composition, and
- applying the curable polyurethane composition into a mould,
- chemically curing the applied composition to form a shaped body formed of a cured polyurethane composition, and
- removing the shaped body from the mould.

In embodiments, the shaped body is a board, particularly a design, styling, model, tooling, or a foundry tooling board, especially for making of models, prototypes, tools, foundry patterns, cold core boxes, and moulds, for example, for use in automotive, marine and aeronautics industries.

In embodiments, the method comprises a further step of subjecting the shaped body to one or more mechanical processing steps, preferably selected from cutting, sawing, milling, threading, water jet or laser treatment, grinding, brushing, polishing, and abrasive blasting.

Another aspect of the present invention is use of the three-dimensional object or the three-dimensional article obtained by using the methods of the present invention as a mould, particularly a prepreg mold, or as a pattern, tool, prototype, master model, core model, or negative model.

In embodiments, the three-dimensional object or the three-dimensional article is used as a prepreg mold, the use comprising steps of:
- providing a composite material part made of pre-impregnated fibers and a non-cured or partially cured resin matrix in the prepreg mould,
- pressing the composite material part against the prepreg mould under heating to give the composite material part a desired shape and to cure the resin matrix,
- removing the shaped composite material part from the prepreg mould, and
- cooling the shaped composite material part.

Particularly, the pressing and curing steps can be conducted using conventional hot pressing or autoclave equipment.

Suitable fibers for use in the composite material part include, for example, glass fibers, basalt fibers, carbon fibers, and aramid fibers. Suitable resins for use in the resin matrix include, particularly, epoxy and phenolic resins and vinyl ester resins. The resin matrix typically also includes one or more thermally activatable (latent) curing agents, such as peroxides, cyanoguanidines, and/or urea derivatives.

Still another aspect of the present invention is use of at least one polyol **PO** having an average hydroxyl number determined according to ISO 4629-2:2016 standard of 350 - 1500 mg KOH/g, preferably 450 - 1000 mg KOH/g to increase a glass transition temperature (T_{g}) determined by dynamical mechanical analysis (DMA) in accordance with ISO 6721-11:2019 standard of a cured polyurethane composition obtained by mixing a first and a second component of a multiple-component polyurethane composition with each other and letting the thus obtained mixture to cure, wherein the at least one polyol **PO** is a tetra- or higher functional polyol containing at least one tertiary amine group, preferably one or two tertiary amine groups.

In embodiments, the proportion of the at least one polyol **PO** makes up at least at least 35 wt.-%, preferably at least 50 wt.-%, more preferably at least 75 wt.-%, still more preferably at least 90 wt.-%, of the total weight of all polyols contained in the first component of the multiple-component polyurethane composition.

In embodiments, the second component of the multiple-component polyurethane composition comprises at least one polyisocyanate **PI,** preferably an aromatic polyisocyanate.

In exemplary embodiments, the at least one polyisocyanate **PI** is selected from monomeric di- and triisocyanates and oligomers, polymers, and derivatives of monomeric di- and triisocyanates, and mixtures thereof.

The at least one polyisocyanate **PI** may have an isocyanate content determined according to ISO 11909:2007 standard of 15 - 50 wt.-%, preferably 20 - 45 wt.-% and/or a viscosity determined according to ISO 3104 :2020 standard of 100 - 500 mPa s, preferably 150 - 350 mPa·s and/or an average isocyanate functionality determined according to ISO 14896-2009 standard method A of 2.0 - 4.0, preferably 2.2 - 3.8.

In embodiments, the at least one polyisocyanate **PI** is selected from monomers, oligomers, polymers, and derivatives of methylene diphenyl diisocyanate (MDI) and monomers, oligomers, polymers, and derivatives of toluene diisocyanate (TDI).

In embodiments, the proportion of monomers of methylene diphenyl diisocyanate (MDI) and/or proportion of monomers of toluene diisocyanate (TDI) is not more than 75 wt.-%, preferably not more than 50 wt.-%, more preferably not more than 35 wt.-%, even more preferably not more than 25 wt.-%, based on the total weight of the at least one polyisocyanate **PI.**

### Examples

The following materials in Table 1 were used in the examples.

| | | |
|---|---|---|
| Polyol 4525 | Tetrafunctional polyol with secondary hydroxyl groups, hydroxyl value 525 mg KOH/g, molecular weight 430 g/mol | Perstorp |
| Dytek^{®} A+PO | Tetrafunctional polyol with two tertiary amine groups, hydroxyl value 627 mg KOH/g , molecular weight 349 g/mol | Invista |
| Lupranol 3508 | Tetrafunctional polyol with two tertiary amine groups, hydroxyl value 740 mg KOH/g, molecular weight 292 g/mol | BASF |
| Desmophen 4050 E | Tetrafunctional polyol with two tertiary amine groups, hydroxyl value 620 mg KOH/g, OH equivalent weight approx. 91 g | Covestro |
| Voranol^{®} RA 640 | Tetrafunctional polyols with two tertiary amine groups (mixture), hydroxyl value 615-665 mg KOH/g, specific gravity (25 °C) 1.07 | Dow |
| Plastomoll^{®} DOA | Bis(2-ethylhexyl)hexanedioate | BASF |
| DIDP | Diisodecyl phthalate | Exxon Mobil |
| Isopar^{®} M | Hydrocarbon oil plasticizer | Exxon Mobil |
| BYK 085 | Silicone-containing leveling additive | BYK |
| Omya^{®} BL | Ultra fine calcium carbonate | Omya |
| Sylosiv A3 | Zeolite powder, 3Å pore size | W. R. Grace |
| Thiocure^{®} GDMP | Glycol di(3-mercaptopropionate) | Bruno Bock Thiochemicals |
| Microspheres S 22 | Hollow glass spheres, true density 0.22 g/cm³, d₅₀ median size 35 µm | 3M |
| Q-CEL^{®} 5028K | Hollow glass spheres, true density 0.25 g/cm³, average size 75 µm | Potters Europe |
| Coscat^{®} 83 | Organobismuth catalyst | Vertellus Specialties |
| Cab-O-SIL^{®} 720 | Hydrophobic fumed silica | Cabot |
| Desmodur^{®} N 3600 | Aliphatic polyisocyanate based on mixture of HDI and IPDI, NCO content 21 wt.-% | Covestro |
| Desmodur^{®} 44 V 20 L NP | Aliphatic polyisocyanate (low-viscosity HDI trimer), NCO content 23 wt.-% | Covestro |
| Desmodur^{®} VKS 20 F | Polymeric isocyanate based on diphenylmethane-4,4'-diisocyanate, NCO content 31.5 wt.-% | Covestro |
| Suprasec^{®} 2030 | Polymeric isocyanate based on diphenylmethane-4,4'-diisocyanate, NCO content 28.6 wt.-%, average NCO functionality 2.3 | Huntsman |

### Preparation of components A and B

For each tested curable polyurethane composition, the ingredients shown in Table 2 below for component A were processed in the stated amounts by means of a vacuum butterfly mixer at the speed of 2350 rpm under vacuum to form a homogeneous paste. The ingredients of the second component B indicated in Table 3 were processed in the same manner.

### Preparation of casted blocks

The A and B components of the tested composition were each filled into a screw-driven twin cartridge dosing system and mixed in a static Quadro mixer MFQ 08-24 T F at a volume ratio of 1.1. The mixed composition was casted within one minute into a round mould box having a total volume of 500 ml.

The casted blocks were removed from the mould and stored for 24 hours at 65 % humidity at room temperature before measuring of their properties.

### 3D printing test with compositions Ex-3 to Ex-8

In the printing tests, a 3D printer comprising a dynamic-static mixer with a length of 17.4 cm and a cylindrical print nozzle having a length of 10 cm, an inner diameter of 22 mm, and an outer diameter of 30 mm arranged on a KUKA KR30 robot was used.

The components A and B of the tested composition were each filled into separated hobbocks of a screw pumping systems NODOPOX 20, which was integrated into the 3D printer. The components were mixed in the dynamic-static mixer of the 3D printer at a volume ratio of 1:1 and fed through the print nozzle at a total flow rate of 0.1 - 1.6 L/min. The total dwell (residence) time of the composition in the static-dynamic mixer and in the print head (nozzle) was about 20-30 seconds.

Compositions of Ex-3 to Ex-8 were printed into two-layer square objects having dimensions of 20 cm x 20 cm x 2 cm (width, length, height) using a printing line thickness and width of 10 mm and about 3.5 mm, respectively.

The printed two-layer objects were further characterized by measuring their density, glass transition temperature, and mechanical properties.

In printing tests of compositions Ex-3 to Ex-8, it was observed that the mixed composition of A and B applied using the print head was thixotropically and dimensionally stable enabling printing of 3D objects using high printing (head) speeds of > 100 mm/s.

The curing behavior of the mixed curable polyurethane composition was often such that the curing of a previous layer was not completed or even not yet started when the subsequent layer was already applied on top of it. This allowed good bonding between the successive layers. After one minute of application of the last layer, the whole 3D printed object turned fully rigid and formed a dry skin.

### Interlayer bonding strength

Interlayer bonding strengths were measured with 3D objects obtained by 3D printing of the compositions of Ex-3 and Ex-5 using a print layer time of 30 or 60 seconds.

The measurement of interlayer bonding strength was conducted by using the 3-point bending tests according to ISO 178 standard using a speed of 1.00 mm/min. Results of these measurements are also given in Table 3.

### Density

Density of the 3D printed objects obtained with compositions of Ex-3 to Ex-8 was determined according to the following procedure.

A rectangular sample having dimensions of 1.5 cm x 2 cm x 3 cm was from the prepared 3D printed objects and the density of the sample was measured using a water immersion method according to ISO 1183-1:2019 standard.

### Glass transition temperature

Glass transition temperatures (T_{g}) of the cured materials were determined using samples having dimensions of 10 mm x 35 mm x 2 mm, which were cut from the prepared casted blocks and printed 3D objects.

The measurements were conducted using dynamical mechanical analysis (DMA) in accordance with ISO 6721-11:2019 standard , where the glass transition temperature is determined as a peak of the measured loss modulus (G") curve using an applied frequency of 1 Hz and a strain level of 0.1 %.

The results of the T_{g} measurements obtained with samples cut from casted blocks ("from block") and from printed 3D objects ("from 3D printed object") are shown in Table 3. In some cases, the glass transition temperature was only measured with a sample cut from a casted block obtained by using the respective composition.

### Gap filling test

Suitability of composition of Ex-6 for use as a decorative filler for wood was tested according to the following procedure.

A mixed paste obtained by mixing of the components A and B was applied into a wood gap, allowed to cure, and subjected to a surface milling step. No bubble formation was observed during the filing and curing steps and a smooth surface could be obtained from the milling treatment.

### Adhesive bonding test

Suitability of composition of Ex-6 for use as an adhesive was tested by measuring the tensile lap shear strengths obtained with bonded wood substrates.

A mixed paste obtained by mixing of the components A and B was applied as a thin film to a first wood substrate having dimensions of 20 mm x 85mm x 5 mm. The applied film had dimensions of 10 mm x 20 mm and a thickness of ca. 100 µm. Immediately after the application of the film, a second wood substrate having same dimensions as the first wood substrate was positioned over the first wood substrate along the edge of the film to form a test composite element. The second wood substrate was pressed firmly against the first wood substrate to remove air from adhesive bond. Any material squeezed out from the joint was trimmed off with a knife.

The tensile lap shear strengths (LSS) were measured with the prepared composite elements, which had been stored for 24 hours after the bonding of the first wood substrate with the second substrate. The measurements were conducted according to EN 1465 standard using a material testing apparatus (Zwick Z 020) and a test speed 10 mm/min.

A value of 7.83 MPa was obtained as average of three measurements conducted with identical test composite elements prepared by using the multiple-component polyurethane composition of Ex-6.

**Table 2**

| Compositions [pbw] | **Ref-1** | **Ex-1** | **Ex-2** | **Ex-3** | **Ex-4** | **Ex-5** | **Ref-2** | **Ex-6** | **Ex-7** | **Ex-8** | **Ex-9** | **Ex-10** |
|---|---|---|---|---|---|---|---|---|---|---|---|---|
| **Component A** | | | | | | | | | | | | |
| Polyol 4525 | 50.60 | | | | | | | | | | | |
| Dytek^{®} A+PO | | 50.60 | 40.00 | | | | | | | | | |
| Lupranol 3508/1 | | | | 32.50 | | | 30.00 | 33.50 | 33.50 | 33.50 | 94.00 | 94.00 |
| Desmophen 4050 E | | | | | 40.00 | | | | | | | |
| Voranol RA 640 | | | | | | 40.00 | | | | | | |
| PLASTOMOLL DOA | 10.00 | 11.00 | 16.00 | 16.00 | 16.00 | 16.00 | | | | | | |
| DIDP | | | | | | | 12.00 | 12.00 | 12.00 | 12.00 | | |
| ISOPAR*M | 7.50 | 7.50 | 12.00 | 16.00 | 12.00 | 12.00 | 11.00 | 11.00 | 11.00 | 11.00 | | |
| BYK 085 | | | 0.20 | 0.20 | 0.20 | 0.20 | | | | | | |
| Omya BL | | | 7.10 | 14.60 | 7.10 | 7.10 | 10.60 | 9.60 | 9.60 | 9.60 | | |
| Sylosiv A3 | | | | | | | 7.00 | 5.50 | 5.50 | 5.50 | | |
| Thiocure GDMP | 0.50 | 2.00 | | | | | | | | | | |
| Microspheres S 22 | | | 8.50 | 8.50 | 8.50 | 8.50 | 11.00 | 11.00 | 11.00 | 11.00 | | |
| Q-CEL 5028K | | | 6.70 | 6.70 | 6.70 | 6.70 | 9.00 | 8.00 | 8.00 | 8.00 | | |
| Coscat 83 | 1.20 | | | | | | | | | | | |
| Cab-O-SIL 720 | | | 9.50 | 9.50 | 9.50 | 9.50 | 8.50 | 8.50 | 8.50 | 8.50 | 6.00 | 6.00 |
| **Total** | 69.80 | 71.10 | 100.00 | 104.00 | 100.00 | 100.00 | 99.10 | 99.10 | 99.10 | 99.10 | 100.00 | 100.00 |

**Table 3**

| Compositions [pbw] | **Ref-1** | **Ex-1** | **Ex-2** | **Ex-3** | **Ex-4** | **Ex-5** | **Ref-2** | **Ex-6** | **Ex-7** | **Ex-8** | **Ex-9** | **Ex-10** |
|---|---|---|---|---|---|---|---|---|---|---|---|---|
| **Component B** | | | | | | | | | | | | |
| Desmodur N 3600 | | | | | | | 70.00 | | | | | |
| Desmodur 44 V 20 L NP | 56.20 | 56.20 | 59.50 | 59.50 | 59.50 | 59.50 | | 61.30 | | | 94.00 | |
| Desmodur VKS 20 F | | | | | | | | | 61.50 | | | |
| Suprasec 2030 | | | | | | | | | | 64.50 | | 94.00 |
| PLASTOMOLL DOA | 16.90 | 16.90 | 15.07 | 15.07 | 15.07 | 15.07 | | | | | | |
| DIDP | | | | | | | 6.80 | 14.50 | 14.50 | 12.50 | | |
| BYK 141 | | | 0.19 | 0.19 | 0.19 | 0.19 | 0.10 | 0.10 | | | | |
| BYK A-500 | | | 0.19 | 0.19 | 0.19 | 0.19 | 0.10 | 0.14 | | | | |
| Siliporite 1720 | | | 6.14 | 6.14 | 6.14 | 6.14 | | | | | | |
| Microspheres S 22 | | | 7.84 | 7.84 | 7.84 | 7.84 | 8.00 | 8.50 | 8.50 | 9.00 | | |
| Q-CEL 5028K | | | 6.24 | 6.24 | 6.24 | 6.24 | 7.50 | 8.00 | 8.00 | 7.50 | | |
| Cab-O-SIL 720 | | | 4.82 | 4.82 | 4.82 | 4.82 | 7.50 | 7.50 | 7.50 | 6.50 | 6.00 | 6.00 |
| **Total** | 73.10 | 73.10 | 100.00 | 100.00 | 100.00 | 100.00 | 100.00 | 100.04 | 100.00 | 100.00 | 100.00 | 100.00 |
| NCO:OH | 1.18 | 1.16 | 1.11 | 1.16 | 1.12 | 1.10 | 1.03 | 1.08 | 1.08 | 1.02 | 1.02 | 1.03 |
| T_{g} from block [°C] | 119 | 176 | 176 | 176 | 176 | 168 | 81 | 201 | 200 | 183 | 210 | 191 |
| T_{g} from 3D printed object [°C] | | | | 173 | 173 | 172 | | 196 | 189 | 183 | | |
| Density [g/cm³] | | | | 0.73 | 0.73 | 0.73 | 0.70 | 0.70 | 0.70 | 0.73 | | |
| Interlayer bond strenght 30 s [MPa] | | | | 10.6 | | 10.83 | | | | | | |
| Interlayer bond strenght 60 s [MPa] | | | | 7.98 | | 7.88 | | | | | | |

## Claims

1. A multiple-component polyurethane composition comprising a first component **A** and a second component **B,** wherein the first component **A** comprises:
a) At least one polyol **PO** having an average hydroxyl number determined according to ISO 4629-2:2016 standard of 350 - 1500 mg KOH/g, preferably 450 - 1000 mg KOH/g
and the second component **B** comprises:
b) At least one aromatic polyisocyanate **PI,**
and wherein the at least one polyol **PO** is a tetra- or higher functional polyol containing at least one tertiary amine group, preferably one or two tertiary amine groups and
wherein the first component **A** comprises at least 10 wt.-%, preferably at least 15 wt.-%, of the at least one polyol **PO.**

2. The multiple-component polyurethane composition according to claim 1 having in its cured state a glass transition temperature (T_{g}) determined by dynamical mechanical analysis (DMA) in accordance with ISO 6721-11:2019 standard of at or above 135 °C, preferably at or above 150 °C.

3. The multiple-component polyurethane composition according to any one of previous claims, wherein the at least one polyol **PO** is a compound of formula (I) 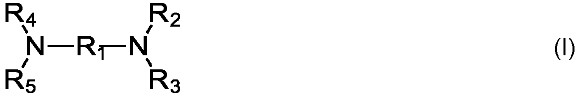
where R₁ represents a linear or branched alkyl group with 2 to 12 carbon atoms, preferably 2 to 8 carbon atoms and
R₂, R₃, R₄, and R₅ each represent linear or branched alkyl group with 2 to 18 carbon atoms, preferably 2 to 12 carbon atoms, substituted with one or more hydroxy groups and optionally containing one or more ether groups.

4. The multiple-component polyurethane composition according to any one of previous claims, wherein the proportion of the at least one polyol **PO** makes up at least 35 wt.-%, preferably at least 50 wt.-%, of the total weight of all polyols contained in the first component **A.**

5. The multiple-component polyurethane composition according to any one of previous claims, wherein the at least one polyol **PO** comprises at least one alkoxylated alkylene diamine **PO1,** preferably selected from N,N,N',N'-tetrakis(2-hydroxyethyl)ethylenediamine, N,N,N',N'-tetrakis(2-hydroxypropyl)ethylenediamine, 1,1',1",1‴-((2-methylpentane-1,5-diyl)bis(azanetriyl))tetrakis(propan-2-ol),3,3',3'',3‴-((2-methylpentane-1,5-diyl)bis(azanetriyl))tetrakis(propane-1,2-diol), 4-[8-hydroxy-3-(2-hydroxypropyl)-5-methyl-6-oxa-3-azanonyl]-4-aza-2,6-heptanediol, and 1-({3-[bis(2-hydroxypropyl)amino]-2-tolyl}(2-hydroxypropyl)amino)-2-propanol.

6. The multiple-component polyurethane composition according to any one of previous claims, wherein the at least one aromatic polyisocyanate **PI** has an isocyanate content determined according to ISO 11909:2007 standard of 15 - 50 wt.-%, preferably 20 - 45 wt.-% and/or a viscosity determined according to ISO 3219-1:2021 standard of 100 - 500 mPa s, preferably 150 - 400 mPa·s and/or an average isocyanate functionality determined according to ISO 14896-2009 standard method A of 2.0 - 4.0, preferably 2.2 - 3.8.

7. The multiple-component polyurethane composition according to any one of previous claims, wherein the at least one aromatic polyisocyanate **PI** is selected from monomers, oligomers, polymers, and derivatives of methylene diphenyl diisocyanate (MDI) and monomers, oligomers, polymers, and derivatives of toluene diisocyanate (TDI).

8. The multiple-component polyurethane composition according to any one of previous claims, wherein the proportion of monomers of methylene diphenyl diisocyanate (MDI) and/or proportion of monomers of toluene diisocyanate (TDI) is not more than 50 wt.-%, preferably not more than 35 wt.-%, based on the total weight of the at least one aromatic polyisocyanate **PI.**

9. Use of the multiple-component polyurethane composition according to any one of previous claims as an adhesive, sealant, coating, as a block material or paste for tooling, modeling, or mould making, or as a 3D printing material.

10. A method for producing a three-dimensional object comprising the steps of:
- providing a multiple-component polyurethane composition according to any one of claims 1-8
- mixing the first component **A** and the second component **B** with each other in a mixer to give a curable polyurethane composition, and
- applying the curable polyurethane composition layer-by-layer using a movable print head of an additive manufacturing device to prepare a shaped body from a cured polyurethane composition.

11. The method according to claim 10 comprising a further step of subjecting at least a portion of a surface of the shaped body to a mechanical treatment step to reduce surface roughness.

12. A method for producing a three-dimensional article comprising the steps of:
- providing a multiple-component polyurethane composition according to any one of claims 1-8,
- mixing the first component **A** and the second component **B** with each other in a mixer to give a curable polyurethane composition, and
- applying the curable polyurethane composition into a mould,
- curing the applied composition to form a shaped body composed of a cured polyurethane composition, and
- removing the shaped body from the mould.

13. The method according to claim 12 comprising a further step of subjecting the shaped body to one or more mechanical processing steps, preferably selected from cutting, sawing, milling, threading, water jet or laser treatment, grinding, brushing, polishing, and abrasive blasting.

14. Use of the three-dimensional object or the three-dimensional article obtained by using the method according to any one of claims 10-13 as a mold, preferably as a prepreg mold, or as a pattern, tool, prototype, master model, core model, or a negative model.

15. Use of at least one polyol **PO** having an average hydroxyl number determined according to ISO 4629-2:2016 standard of 350 - 1500 mg KOH/g, preferably 450 - 1000 mg KOH/g to increase a glass transition temperature (T_{g}) determined by dynamical mechanical analysis (DMA) in accordance with ISO 6721-11:2019 standard of a cured polyurethane composition obtained by mixing a first and a second component of a multiple-component polyurethane composition with each other and letting the thus obtained mixture to cure, wherein the at least one polyol **PO** is a tetra- or higher functional polyol containing at least one tertiary amine group, preferably one or two tertiary amine groups.

16. Use according to claim 15, wherein the proportion of the at least one polyol **PO** makes up at least at least 35 wt.-%, preferably at least 50 wt.-%, of the total weight of all polyols contained in the first component of the multiple-component polyurethane composition.

17. Use according to claim 15 or 16, wherein the second component of the multiple-component polyurethane composition comprises at least one polyisocyanate **PI,** preferably an aromatic polyisocyanate.
